Europäisches Patentamt

**European Patent Office**

**Office européen des brevets**

(19)

(11) Veröffentlichungsnummer: **0 035 643**
**B1**

(12) # EUROPÄISCHE PATENTSCHRIFT

(45) Veröffentlichungstag der Patentschrift:
**25.05.83**

(51) Int. Cl.³: **A 23 L  1/30,** A 23 L  1/04,
A 23 L  1/34

(21) Anmeldenummer: **81100719.4**

(22) Anmeldetag: **02.02.81**

(54) **Diätetische Lebensmittel sowie Verfahren zur Herstellung dieser Lebensmittel.**

(30) Priorität: **11.03.80 DE 3009210**

(43) Veröffentlichungstag der Anmeldung:
**16.09.81 Patentblatt 81/37**

(45) Bekanntmachung des Hinweises auf die Patenterteilung:
**25.05.83 Patentblatt 83/21**

(84) Benannte Vertragsstaaten:
**AT BE CH DE FR GB IT LI LU NL SE**

(56) Entgegenhaltungen:
**DE-A-2 658 767**
**DE-A-2 708 404**
**DE-A-2 729 370**
**GB-A-1 422 345**

(73) Patentinhaber: **Ringel, Karl-Peter, Dr., Freudenblick 6,
D-5308 Rheinbach / Loch (DE)**

(72) Erfinder: **Ringel, Karl-Peter, Dr., Freudenblick 6,
D-5308 Rheinbach / Loch (DE)**

(74) Vertreter: **Ratzel, Gerhard, Dr., Seckenheimer
Strasse 36a, D-6800 Mannheim 1 (DE).**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Diätetische Lebensmittel sowie Verfahren zur Herstellung dieser Lebensmittel

Die vorliegende Erfindung betrifft diätetische Lebensmittel, in denen sowohl die physiologischen Brennwerte als auch die Glukoseäquivalente im Vergleich zu üblichen Lebensmitteln reduziert sind. Dadurch eignen sich die erfindungsgemäßen Lebensmittel nicht nur für Diabetiker, sondern ganz generell für alle Fälle, in denen diätetische Lebensmittel z. B. aus kosmetischen und/oder therapeutischen Gründen gewünscht werden oder indiziert sind.

Die Erfindung bezieht sich ferner auf die Herstellung bzw. Gewinnung der erfindungsgemäßen Lebensmittel, die spezielle Polysaccharidformen enthalten, die als Austausch- bzw. Füllstoffe dienen und keinen nennenswerten eigenen physiologischen Brennwert enthalten.

Im Prinzip ist die Aufgabe, diätetische Lebensmittel herzustellen, insbesondere solche für Diabetiker, bekannt und bereits mehrfach bearbeitet worden. Dabei ging man in aller Regel so vor, daß man die Glukoseäquivalente reduzierte, indem man die Menge an verdaulichen bzw. den Glukosestoffwechsel stimulierenden Kohlehydraten verminderte und dafür beispielsweise den Eiweißanteil des Lebensmittels erhöhte und/oder Saccharose bzw. Glukose durch Zuckeraustauschstoffe mit oder ohne Süßstoffzusatz partiell oder vollständig ersetzte. Ein derartiges Vorgehen führt zwar zu einem für Diabetiker geeigneten, den Glukosestoffwechsel weniger belastenden Lebensmittel, jedoch wird durch diese Maßnahmen der physiologische Brennwert des Lebensmittels nicht wesentlich verändert, so daß das bei Diabetikern häufig auftretende Problem des Übergewichtes mit einem solchen Diätetikum nicht ausgeräumt werden kann. In anderen Fällen versetzte man die Lebensmittel mit einem nicht nährenden eßbaren Zellulosemittel als Füllstoff, wobei man die häufig resultierenden Verdauungsprobleme in Kauf nehmen mußte.

Die erfindungsgemäßen diätetischen Lebensmittel zeichnen sich nun dadurch aus, daß sie gleichzeitig sowohl hinsichtlich der physiologischen Brennwerte für das Gesamtlebensmittel als auch hinsichtlich der Glukoseäquivalente reduziert sind und außerdem nur solche Füllstoffe enthalten, die im menschlichen Organismus weitgehend abbaubar sind. Dies wird dadurch erreicht, daß man den Lebensmitteln etwa 10 bis 90% an speziellen, schlecht direkt verdaulichen Polysaccharidformen, die in der weiter unten noch näher beschriebenen Weise erhalten wurden, inkorporiert. Diese Polysaccharidformen besitzen selbst keinen nennenswerten eigenen physiologischen Brennwert und unterscheiden sich von anderen in Lebensmitteln gebräuchlichen Polysacchariden im wesentlichen dadurch, daß sie im menschlichen Colon zu einem weitaus größeren Teil als z. B. Cellulose bakteriell abgebaut werden können. Andererseits ist eine Resorption eventuell kalorisch relevanter Spaltstücke nicht zu erwarten.

Ein weiterer Vorteil der erfindungsgemäß einzusetzenden speziellen Polysaccharidformen besteht darin, daß sie geschmacksneutral sind und mit Wasser bzw. wasserhaltigen Lebensmitteln wenig quellen. Dadurch wird die Verzehrsfähigkeit und Akzeptanz der erfindungsgemäßen diätetischen Lebensmittel durch den Gehalt an diesen Polysaccharidformen nicht beeinträchtigt, und beispielsweise ist das bei manchen bekannten Erzeugnissen störende Kleben der Füllstoffe im Mund bzw. an den Zähnen nicht zu beobachten.

Die erfindungsgemäß einzusetzenden Polysaccharidformen lassen sich aus pflanzlichen protopektin-haltigen Rohstoffen wie z. B. Kernobst (wie Äpfeln oder Quitten), Steinobst (wie Aprikosen), Citrusfrüchten (wie Grapefruit, Orangen oder Zitronen), Karotten, aber auch aus entkörnten Maiskolben oder Sonnenblumenkronen, aus Rüben, insbesondere Zuckerrüben, sowie auch aus Hanfstengelabfällen erhalten. Sehr geeignete Ausgangsmaterialien sind beispielsweise auch die Abfälle von Rübenzuckerfabriken, bei denen es sich um geschnitzelte, extrahierte bzw. gepreßte Zuckerrüben handelt (vgl. US-A-2 109 950 und US-A-1 976 741).

Bevorzugt wird für die Herstellung einer erfindungsgemäß einzusetzenden Polysaccharidform aus Äpfeln ausgegangen.

Zur Gewinnung der erfindungsgemäß einzusetzenden Polysaccharidformen aus Äpfeln kann man beispielsweise wie folgt vorgehen:

Ganze, nach Möglichkeit kurz vor der Endreife stehende, Äpfel werden gewaschen, zerkleinert und sofort durch Pressen entsaftet. Der Preßrückstand wird möglichst umgehend getrocknet und danach gemahlen. Das so erhaltene Produkt enthält etwa 8 bis 12% Feuchtigkeit und kann in dieser Form (gegebenenfalls auch vor dem Mahlen) gelagert werden. Das Trocknen des Produktes erfolgt zweckmäßig im Vakuum. Zur Vermeidung von Verfärbungen des Produktes, die auch in den erfindungsgemäß einsetzbaren Polysaccharidformen zumindest teilweise verbleiben könnten, kann man so vorgehen, daß man die Stufen der Zerkleinerung bis Trocknung unter einem Schutzgas wie z. B. Stickstoff durchführt. Es empfiehlt sich, möglichst in geschlossenen Apparaturen bzw. Anlagen zu arbeiten.

Das so erhaltene Produkt wird dann einem Extraktionsverfahren unterworfen, bei dem man beispielsweise wie folgt vorgehen kann:

Man trägt unter gutem Rühren das gemahlene Produkt in wäßrige niedere Alkohole mit 1 bis 4 Kohlenstoffatomen, insbesondere Propanol oder auch Isopropanol oder Ethanol bei erhöhter Temperatur bis maximal 75°, zweckmäßig bei 65 bis 70°, ein und rührt das Gemisch für 24 Stunden bei dieser Temperatur. Vorzugsweise beträgt im Extraktionsmittel die Alkoholkonzentration etwa 40–60%, insbesondere 50–55%. Dann wird die Festsubstanz beispielsweise durch Abzentrifugieren isoliert und noch 2- bis 3mal in gleicher Weise extrahiert, bis etwa Gewichtskonstanz des Rückstandes erreicht ist oder bis etwa 56% des Einsatzgewichtes als Rückstand verbleiben. Danach wird die Festsubstanz ein- bis zweimal mit einem kalten, ca. 80%igen niederen Alkohol (mit 1 bis 3 Kohlenstoffatomen), vorzugsweise Propanol oder Ethanol, gewaschen und noch alkoholfeucht vermahlen und schließlich getrocknet. Man kann auch den beispielsweise durch Zentrifugieren erhaltenen gewaschenen Rückstand als solchen trocknen und dann vermahlen. Die zweckmäßigste Vorgehensweise richtet sich u. a. nach den technologischen Gegebenheiten. Die so erhaltenen Polysaccharidformen sind in jedem Falle für die Herstellung der erfindungsgemäßen diätetischen Lebensmittel geeignet.

In analoger Weise kann man in den erfindungsgemäßen diätetischen Lebensmitteln verwendbare Polysaccharidformen auch aus den anderen vorstehend genannten pflanzlichen Rohstoffen erhalten, wobei natürlich in für den Fachmann geläufiger bzw. naheliegender Weise in an die Natur der Rohstoffe angepaßter Weise vorgegangen werden muß. So entfällt z. B. bei den Abfällen der Rübenzuckerfabriken das Zerkleinern und Auspressen (in der ersten Stufe) oder z. B. bei Hanfstengelabfällen das Entsaften.

Als Extraktionsmittel kommen insbesondere wäßrige niedere Alkohole in Betracht. Man kann aber auch wäßrige Lösungen anderer indifferenter, insbesondere neutral reagierender, mit Wasser in weiten Bereichen mischbarer organischer Lösungsmittel, wie z. B. Tetrahydrofuran, Dioxan, Aceton usw. verwenden, wobei sich auch in diesen Fällen aber das Nachwaschen mit einem wäßrigen niederen Alkohol empfiehlt. In den Extraktionsmitteln kann der Wassergehalt in weiten Grenzen schwanken und auch gegen Null gehen.

Gewünschtenfalls können die Polysaccharidformen vor der Einarbeitung in die erfindungsgemäßen Lebensmittel auch noch gebleicht werden, um im Herstellungsverfahren aufgetretene Verfärbungen (die insbesondere beobachtet werden, wenn die ersten Herstellungsschritte ohne Anwendung eines Schutzgases und/oder in offenen Behältern durchgeführt wurden) zu vermindern bzw. auszuschalten. Als Bleichmittel eignen sich z. B. oxydierende Mittel wie Natriumchlorit und dergleichen.

Die erfindungsgemäß zu verwendenden speziellen Polysaccharidformen stellen Gemische bzw. Verbindungen aus hochmolekularen Polysacchariden dar, wie z. B. unlösliches, wahrscheinlich mit Cellulose verbundenes Protopektin, die — wie bereits gesagt — mit Wasser bzw. wasserhaltigen Lebensmitteln wenig quellen und mit allen Lebensmittelbestandteilen kompatibel sind. Das oben beschriebene Vorgehen gestattet es, diese Polysaccharidformen in Gestalt von im wesentlichen leeren Pflanzenzellen zu gewinnen, deren Struktur und Identität z. B. mikroskopisch zu bestimmen ist.

Bei den erfindungsgemäßen diätetischen Lebensmitteln handelt es sich beispielsweise um Backwaren (Frisch-, Dauer- und Feinbackwaren), Mahlprodukte (wie Mehlmischungen), Stärkezubereitungen und dergleichen), Teigwaren, Frühstücksmüslis und Frühstücksflocken, Milcherzeugnisse (wie z. B. Milchpulverzubereitungen), Fleischextrakte, Brüherzeugnisse, Suppen- und Soßenpulver, aber auch um Obsterzeugnisse (wie z. B. Konfitüren, Marmeladen, Kraute, Sirupe, Fruchtpulver usw.) sowie um Süßwaren einschließlich Puddings und Desserts.

Die erfindungsgemäß einzusetzenden speziellen Polysaccharidformen können für die Lebensmittelindustrie auch als granulierte, agglomerierte oder auch pulverisierte Formen zur Verfügung gestellt werden, wobei insbesondere die granulierten Formen auch beispielsweise mit Diabetikerschokolade überzogen werden können; zum Gegenstand der Erfindung gehören auch derartige Zubereitungsformen und ihre Verwendung zur Herstellung von diätetischen Lebensmitteln.

Die erfindungsgemäßen diätetischen Lebensmittel enthalten vorzugsweise 15% oder mehr der speziellen Polysaccharidformen bezogen auf das verkehrsfähige Lebensmittel. Die Mengen richten sich im einzelnen nach der Natur des betreffenden Lebensmittels und können beispielsweise in Backwaren 15 bis 88% betragen, während man beispielsweise in Marmeladen oder Konfitüren den Anteil an energieliefernden Kohlehydraten aus den Früchten dadurch reduzieren kann, daß die Fruchteinwaage zu etwa 20 bis 30% durch die speziellen Polysaccharidformen ersetzt wird (in solchen Fällen ist der zuzusetzende Zuckeranteil selbstverständlich in an sich bekannter Weise durch Süßstoffe zu ersetzen).

Das in den erfindungsgemäß einzusetzenden Polysaccharidformen neben anderen Komponenten enthaltene Protopektin wird im Organismus zumindest teilweise zu löslichem Pektin umgewandelt, das in bekannter Weise den Lipidstoffwechsel durch Senkung des Blutcholesterinspiegels günstig beeinflußt und die Insulin-Wirkung verbessert. Die erfindungsgemäßen diätetischen Lebensmittel sind daher nicht nur für Diabetiker und Übergewichtige, sondern insbesondere auch zur Vorbeugung von Arteriosklerose sowie für herzinfarktgefährdete Patienten bzw. für Herzinfarktrekonvaleszenten von besonderem Wert. Die granulierten, agglomerierten oder auch pulverisierten speziellen Polysaccharidformen eignen sich aus den gleichen Gründen daher auch zur Verwendung in bzw. zur Herstellung von Arzneimitteln.

Die folgenden Beispiele dienen zur weiteren Erläuterung des Gegenstandes der Erfindung. Bei deren Durchführung wurde die wie oben beschrieben aus Äpfeln gewonnene spezielle Polysaccharidform eingesetzt, die in den Beispielen als »Pulver A« bezeichnet wird.

## Beispiel 1

### Pulver A enthaltendes Brot

Rezeptur:

| | |
|---|---|
| 200 g | Sojagrobgrieß (Vollsoja) |
| 180 g | Weizenmehl, Type 817 |
| 200 g | Roggenmehl, Type 997 |
| 30 g | Bäckerhefe |
| 10 g | Speisesalz |
| 25 g | Fertigsauer (trocken) |
| 50 g | Trockenkleber |
| 305 g | Pulver A |
| 700 ml | Wasser |

Herstellung:

Sojagrieß wird in lauwarmem Wasser ca. 1 Stunde eingeweicht und anschließend mit allen in der Rezeptur aufgeführten Zutaten inklusive der in etwas Wasser aufgelösten Hefe zu einem Teig, gegebenenfalls unter Zusatz von so viel weiterem Wasser, daß die gewünschte Teigkonsistenz erhalten wird bzw. bleibt, verknetet. Dieser Teig muß bei ca. 50°C »gehen« bis er etwa das Doppelte seines Volumens erreicht hat. Anschließend wird er noch einmal geknetet, zu Broten geformt und auf ein gefettetes Backblech gelegt (auch kasten- und Rundformen sind verwendbar). Auf dem Blech (bzw. in den Formen) läßt man die Brote wieder bei etwa 50°C 30 Minuten »gehen«, sticht sie anschließend auf der Oberseite mehrere Male mit einer Gabel ein und backt sie im vorgeheizten Ofen bei 225°C für 55 Minuten. Kurz vor dem Ende der Backzeit werden die Brote mit warmem Wasser bepinselt bzw. besprüht.

Das so erhaltene Brot ist schnittfest und wie üblich verzehrsfähig, wobei allerdings der physiologische Brennwert nur 130 Kcal/100 g (544 KJ/100 g) beträgt; verglichen mit handelsüblichem Schwarzbrot ist die Energiedichte dieses Lebensmittels um ca. 47% niedriger. Somit eignet sich das erfindungsgemäße Brot vorzüglich für die diätetische Führung alimentär adipöser Personen sowie für die Diabetiker-Diät, zumal seine geschmacklichen Qualitäten (es ähnelt im Aussehen, Struktur und Geschmack herkömmlichem Vollkornbrot) eine Langzeitanwendung ermöglichen.

## Beispiel 2

### Pulver A enthaltende Nudeln

Rezeptur:

| | |
|---|---|
| 800 g | Hartweizengrieß (Durum-Grieß) |
| 200 g | Pulver A |
| 4 | Hühnereier |
| 410 ml | Wasser |
| 3 g | Speisesalz |
| 12 | Tropfen Speiseessig |

Herstellung:

Der Grieß und das Pulver A werden innig gemischt und auf einem Backblech zum Kranz versiebt. In die Mitte gibt man die verquirlten Eier und das Salz. Nach und nach rührt man das lauwarme Wasser mit einem schmalen Holzlöffel schnell ein, hackt mit dem Teigspachtel durch und drückt den Teig zusammen, knetet, schlägt oder wirft ihn, gegebenenfalls unter Zusatz von weiterem Wasser, bis er die gewünschte Konsistenz hat. Dann wird er zu einer Rolle oder Kugel geformt, mit Wasser dünn bepinselt oder besprüht und im warmen Raum (ca. 25°C) zugedeckt etwa 30 bis 60 Minuten ruhen gelassen. Danach teilt man den Teig in 8 – 10 Stücke, die sehr dünn (ca. 1 – 1,5 mm) ausgerollt werden. Man läßt kurz antrocknen und schneidet anschließend mit dem Rollschneider in schmale Streifen. Die so erhaltenen Teigstränge werden mit Warmluft zwischen 20 und 33°C, jedoch nicht über 38°C getrocknet (Band- oder Trommeltrockner).

Man erhält so beim Kochen formbeständige Nudeln, deren physiologischer Brennwert gegenüber herkömmlich produzierter Ware um etwa 20% erniedrigt wurde.

Beispiel 3

Granulat aus Pulver A

Prinzip:

Die Erzeugung des Granulats erfolgt in einem nach oben konisch eingezogenen Behälter, der mit einem dicht am Behälterboden umlaufenden Rührer ausgestattet ist, welcher das Material intensiv mischt. Hierdurch wird eine schnelle und gleichmäßige Benetzung bei Zugabe der Granulierflüssigkeit erreicht. Die entstehenden größeren Klumpen werden durch ein seitlich im dichtesten Materialstrom umlaufendes Zerhackerwerkzeug wieder aufgeschlagen, so daß ein Granulat mit einer Korngröße von 0,1 bis 2 mm entsteht. Zum Trocknen des Granulates kann durch Luftschlitze im Boden des Behälters Warmluft eingeblasen werden. Das Entleeren des Behälters erfolgt bei laufendem Mischwerkzeug über einen seitlich in der Nähe des Behälterbodens angeflanschten Auslauf.

Herstellung:

300 g Gelatine werden in 810 ml kochendem destilliertem Wasser gelöst und mit 90 ml 2 n-Salzsäure vermischt. Unter kräftigem Schütteln werden dann 1800 ml auf 50°C vorgewärmtes Ethanol zugegeben. Die so erhaltene Granulierflüssigkeit weist aufgrund des Salzsäuregehaltes einen pH-Wert von ca. 2 auf.
In den Mischbehälter gibt man 15 kg getrocknetes Pulver A und läßt den Rührer für 1 bis 2 Minuten mit ca. 200 UpM laufen. Dann gießt man bei einer Rührgeschwindigkeit von ca. 100 UpM durch eine Öffnung im Deckel des Mischers innerhalb von etwa einer Minute die Granulierflüssigkeit ein. Sofort anschließend wird mit der Granulation begonnen. Hierzu läßt man das Rührwerkzeug und den Zerhacker für ca. 7 bis 8 Minuten bei maximaler Geschwindigkeit (ca. 200 UpM) laufen. Nach erfolgter Granulation werden Rührer und Zerhacker abgestellt, der Mischbehälter geöffnet und das durch den Zerhacker gegen den Deckel geworfene Material abgeschabt.
Zur Trocknung werden nach Einschalten des Gebläses die im Boden des Behälters angebrachten Luftschlitze geöffnet, so daß die Trocknungsluft (ca. 40°C) durch das Granulat geführt wird.
Der anliegende Luftdruck wird so gewählt, daß ein Eindringen von Granulat in die Luftschlitze verhindert wird. Zur homogenen Trocknung läßt man während der Trocknungsphase von ca. 25 bis 30 Minuten den Rührer mit ca. 15 UpM rotieren.
Das Granulat wird bei rotierendem Mischwerkzeug über den seitlich am Mischbehälter angeflanschten Auslauf entnommen.
Das erhaltene Granulat kann z. B. in Lebensmittel eingebracht werden (vergleiche Beispiel 4), es ist aber auch ohne weitere Verarbeitung verzehrsfähig. Gewünschtenfalls kann es in üblicher Weise mit Diabetiker-Schokolade oder dergleichen überzogen werden.
Das Produkt eignet sich auch zur Verwendung bzw. Weiterverarbeitung als Arzneimittel (es ist preßfertig und kann daher ohne weiteres, gegebenenfalls aber auch nach vorherigem Vermischen mit Hilfs- und/oder Wirkstoffen zu Tabletten bzw. zu Dragee-Kernen verpreßt werden).

Beispiel 4

Frühstücks-Müsli

Zutaten:

400 g  Haferflocken
100 g  eines handelsüblichen kakaohaltigen Getränkepulvers (bestehend aus
      20 g     entöltem Kakaopulver,
      20 g     Traubenzucker,
      58,5 g Kristallzucker,
       1 g      Sojalecithin,
      0,5 g  Mineral- und Aromastoffgemisch)
 50 g  gehackte und geröstete Haselnüsse
150 g  Sultaninen oder Rosinen
300 g  des nach Beispiel 3 aus Pulver A erhaltenen Granulates

Herstellung:

Die oben angeführten Zutaten werden innig miteinander trocken vermischt, wobei darauf zu achten ist, daß das Granulat des Pulvers A als letzte Komponente in den Mischkessel eingebracht wird.

Das auf diese Weise gewonnene Frühstücks-Müsli kann mit kalter oder warmer Milch oder heißem Kakao übergossen werden; nach dem Umrühren wird es kurze Zeit ziehen gelassen, um ein sämiges wohlschmeckendes Produkt zu erhalten. Nach Wunsch kann das Müsli statt mit Milch auch mit Orangensaft oder dergleichen angerichtet werden.

Verglichen mit handelsüblichen, geschmacklich vergleichbaren Produkten, ist der physiologische Brennwert des erfindungsgemäßen Frühstücks-Müslis um 30% niedriger.

## Beispiel 5

### Frühstücksflocken

Rezeptur:

| | | |
|---|---|---|
| 100 g | handelsübliche Halbfett-Margarine | |
| 50 g | proteinangereichertes Spezialmehl (z. B. Vitanovamehl®) | |
| 50 g | getrocknete Kokosraspeln | |
| 800 g | Pulver A | |
| 25 ml | handelsübliche Natrium-cyclamat-Lösung | |
| 2 | Fläschchen Backaroma (Zitrone- oder Butteraroma) | |
| 1420 ml | Wasser | |

Herstellung:

Das Backaroma und die Cyclamatlösung werden zum Wasser gegeben und mit allen Zutaten zu einem Teig verknetet, wobei man zur Erlangung der gewünschten Teigkonsistenz eventuell weitere Wassermengen zugibt. Der Teig wird so dünn als es technologisch durchführbar ist (ca. 1 mm) ausgerollt und in Rauten mit der Kantenlänge von etwa 5 cm geschnitten. Die rautenförmigen Teigstücke werden auf ein mit Backfolie ausgelegtes Blech gebracht, wobei darauf zu achten ist, daß zwischen den einzelnen Stücken ein Mindestabstand von ca. 1,5 mm eingehalten wird.

Das Abbacken geschieht für etwa 10 — 15 Minuten im vorgeheizten Ofen bei ca. 175° C.

Produkt:

Man erhält großflockige, in der Struktur Cornflakes vergleichbare Gebilde. Mit Milch übergossen, kann der Diabetiker ohne Widerwillen 80 bis 100 g des Produktes pro Tag verzehren. Damit wird eine Menge des Pulvers A aufgenommen, die geeignet ist, den Anstieg der Blutglucosekonzentration zu verzögern und somit die Insulinsekretion zu erniedrigen.

Der Serumcholesterinspiegel des Hypercholesterinämikers wird durch täglichen Verzehr von etwa 100 — 120 g der so erhaltenen Frühstücksflocken gesenkt.

## Beispiel 6

### Mokka-Taler

Rezeptur:

| | |
|---|---|
| 18 kg | gebrochene, von Schale und Keim befreite Kakaokerne |
| 15 kg | zusätzliche Kakaobutter (oder Spezialfett mit vergleichbarem Härtegrad und Schmelzpunkt) |
| 22 kg | gemahlener Kristallzucker |
| 3 kg | gemahlener Röstkaffee |
| 9,98 kg | Vollmilchpulver |
| 2 kg | Sojalecithin |
| 30 kg | Pulver A |
| 20 g | Vanillin |

Herstellung:

Die gebrochenen Kakaokerne werden auf einem Kakaokombinationsmahlwerk zu Kakaomasse vermahlen, die mit 9 kg der Kakaobutter (bzw. des Spezialfettes), 0,8 kg Sojalecithin und der Gesamtmenge der übrigen Zutaten in einem kontinuierlich arbeitenden Kneter in ca. 15 bis 20 Minuten zu einer pastösen Masse verarbeitet wird. Diese wird über fünf Walzwerke zu einem flockigen Produkt ausgewalzt, wobei die Walzen mit Leitungswasser kontinuierlich gekühlt werden.

Das Walzgut wird unmittelbar anschließend in Conchen gefüllt und darin für ca. 48 Stunden conchiert. Danach erfolgt unter weiterer Bewegung der Granitwalze der Conche das Einmischen der restlichen Kakaobutter (bzw. des Spezialfettes) sowie der Restmenge Sojalecithin, bis die Masse die für die spätere Verformung erforderlichen Fließeigenschaften aufweist (ca. 15 Minuten).

Die so erhaltene Masse wird nunmehr in einer Temperiermaschine auf eine Temperatur zwischen 29° und 30°C gebracht und danach kontinuierlich in die Gießmaschine einer Eintafelungs-/Dosierungsanlage überführt. Dort erfolgt die Dosierung der fließfähigen Masse in als Talerform ausgeprägte Kunststoff-Formen (Talergewicht ca. 5 g).

Die so gefüllten Kunststoff-Formen werden auf der Anlage über Klopftisch und Kühlkanal in die Ausschlagmaschine geführt.

Vom Hammerwerk werden die erkalteten, ausgeformten Taler ausgeklopft. Schließlich erfolgt das Stanniolieren der verzehrsfähigen Mokka-Taler.

Die Taler besitzen einen angenehmen Mokka-Geschmack und zeichnen sich u. a. dadurch aus, daß ihr physiologischer Brennwert um ca. 30% niedriger als der vergleichbarer Süßwaren ist.


Variation für Diabetiker:

Bei Austausch des Kristallzuckers gegen Zuckeraustauschstoffe (wie z. B. Sorbit, Xylit) und/oder Süßstoffe (z. B. Cyclamat, Saccharin) entsteht ein schmackhaftes, auch für Diabetiker geeignetes Produkt mit signifikant reduziertem Brennwert.


Beispiel 7

Grieß-Käse-Schaumauflauf

Rezeptur für 5 Personen:

| | |
|---|---|
| 100 g | eines innigen Gemisches aus |
| | 70 g Weichweizengrieß und |
| | 30 g Pulver A |
| 1,0 – 1,2 l | Rindsbouillon |
| 3 g | geriebene Muskatnuß |
| 4 | Hühnereier |
| 4 | kernlose grüne gehackte Oliven |
| 6 | Scheiben Salami |
| 125 g | neutraler Schmelzkäse (20% Fett i.T.) |
| 0,25 l | Magermilch |
| 6 g | edelsüßes Paprikapulver |


Herstellung:

Die Bouillon wird auf ca. 90°C erhitzt. Dann rührt man das Gemisch aus Grieß und Pulver A ein, läßt verdicken, fügt die Muskatnuß zu und läßt abkühlen.

Die Eier werden getrennt und die Eigelbe in den erkalteten Brei gerührt, der dann mit dem Schneebesen schaumig geschlagen wird. Unter diese Masse werden die zu steifem Schnee geschlagenen Eiweiße gehoben und dann wird das Gemisch in eine feuerfeste flache Form gegeben.

Der Schmelzkäse wird mit der Milch, dem Paprikapulver, den Oliven und der in Streifen geschnittenen Salami cremig gerührt und damit der Grießschaum abgedeckt.

Man backt den Auflauf im Ofen bei etwa 180° für 50 Minuten. Der Schaum steigt dabei hoch auf und bräunt sich obenauf.

Nach Abkühlen wird das Produkt schock-tiefgefroren und ist so transport- und lagerfähig. Vor dem Verzehr wird es in üblicher Weise im Backofen wieder auf eine entsprechende Temperatur aufgeheizt.

Der so hergestellte wohlschmeckende Schaumauflauf zeichnet sich dadurch aus, daß jede Einzelportion, welche eine vollständige Hauptmahlzeit darstellt, einen physiologischen Brennwert von weniger als 400 Kcal (1673,6 KJ) aufweist.

## Patentansprüche für die Vertragsstaaten: BE, CH, DE, FR, GB, IT, LI, LU, NL, SE

1. Diätetische Lebensmittel, gekennzeichnet durch einen Gehalt an durch Extraktion von gegebenenfalls entsafteten pflanzlichen protopektinhaltigen Rohstoffen mit wäßrigen Lösungen indifferenter, neutral reagierender, mit Wasser mischbarer organischer Lösungsmittel, vorzugsweise niederer Alkohole mit 1 bis 4 Kohlenstoffatomen, erhaltenen Polysaccharidformen.

2. Diätetische Lebensmittel nach Anspruch 1, dadurch gekennzeichnet, daß entsaftetes Kernobst, Steinobst, Citrusfrüchte oder Rüben, Karotten, entkörnte Maiskolben oder Sonnenblumenkronen oder Hanfstengelabfälle als protopektinhaltige Ausgangsmaterialien eingesetzt werden.

3. Diätetische Lebensmittel nach Anspruch 2, dadurch gekennzeichnet, daß entsaftete, vorzugsweise kurz vor der Endreife stehende Äpfel als Ausgangsmaterial eingesetzt werden.

4. Diätetische Lebensmittel gemäß Ansprüchen 1−3, gekennzeichnet durch einen Gehalt von 10 oder mehr Gewichtsprozent der in den Ansprüchen 1−3 definierten Polysaccharidformen.

5. Diätetische Lebensmittel gemäß Ansprüchen 1 bis 4, gekennzeichnet durch einen Gehalt von 15 bis 90 Gewichtsprozent der in den Ansprüchen 1 bis 3 definierten Polysaccharidformen.

6. Diätetische Backwaren, insbesondere diätetisches Brot, gekennzeichnet durch einen Gehalt von 15 bis 88%, der in den Ansprüchen 1−3 definierten Polysaccharidformen.

7. Verfahren zur Herstellung von Granulaten der in den Ansprüchen 1−3 definierten Polysaccharidformen, dadurch gekennzeichnet, daß die pulverförmigen Polysaccharidformen mit einer auf ca. pH 2 eingestellten Lösung von Gelatine in wäßrigem Ethanol in an sich bekannter Weise granuliert werden.

## Patentansprüche für den Vertragsstaat: AT

1. Verfahren zur Herstellung von diätetischen Lebensmitteln, dadurch gekennzeichnet, daß man durch Extraktion von gegebenenfalls entsafteten pflanzlichen protopektinhaltigen Rohstoffen mit wäßrigen Lösungen indifferenter, neutral reagierender, mit Wasser mischbarer organischer Lösungsmittel, vorzugsweise niederer Alkohole mit 1 bis 4 Kohlenstoffatomen, erhaltene Polysaccharidformen in einer Menge von 15 bis 90 Gewichtsprozent in übliche Lebensmittel einarbeitet.

2. Verfahren zur Herstellung diätetischer Lebensmittel gemäß Anspruch 1, dadurch gekennzeichnet, daß entsaftetes Kernobst, Steinobst, Citrusfrüchte oder Rüben, Rübenabfälle, Karotten, entkörnte Maiskolben oder Sonnenblumenkronen oder Hanfstengelabfälle als protopektinhaltige Ausgangsmaterialien eingesetzt werden.

3. Verfahren gemäß Anspruch 2, dadurch gekennzeichnet, daß entsaftete, vorzugsweise kurz vor der Endreife stehende Äpfel als Ausgangsmaterial eingesetzt werden.

4. Verfahren zur Herstellung von diätetischen Lebensmitteln gemäß Ansprüchen 1 bis 3 in Form von Backwaren, dadurch gekennzeichnet, daß man bei der Herstellung der Teigmischung 15 bis 88% der in Ansprüchen 1 bis 3 definierten Polysaccharidformen zusetzt und dann den Teig in üblicher Weise weiterbehandelt.

5. Verfahren zur Herstellung von Granulaten aus den in Ansprüchen 1 bis 3 definierten Polysaccharidformen, dadurch gekennzeichnet, daß die pulverförmigen Polysaccharidformen mit einer auf ca. pH 2 eingestellten Lösung von Gelatine in wäßrigem Ethanol in an sich bekannter Weise granuliert werden.

## Claims for the Contracting states: BE, CH, LI, DE, FR, GB, IT, LU, NL, SE

1. Dietetic foods, characterised by a content of polysaccharide forms obtained by extraction from vegetable protopectin-containing raw materials, if necessary with the juice removed, with aqueous solutions of inert, neutrally reacting organic solvents miscible with water, preferably lower alcohols with 1 to 4 carbon atoms.

2. Dietetic foods according to Claim 1, characterised in that stone fruits, drupes, citrus fruits or beets, carrots, stoned corncobs or sunflower corollae or hemp stalk waste, from which the juice has been removed are used as protopectin-containing starting materials.

3. Dietetic foods according to Claim 2, characterised in that apples are used preferably shortly before final ripeness and from which the juice has been removed, as starting material.

4. Dietetic foods according to Claims 1−3, characterised by a content of 10 or more percent by weight of the polysaccharide forms defined in Claims 1 — 3.

5. Dietetic foods according to Claims 1 — 4, characterised by a content of 15 to 90 percent by weight of the polysaccharide forms defined in Claims 1 — 3.

6. Dietetic bakery goods, in particular dietetic bread, characterised by a content of 15 to 88% of the polysaccharide forms defined in Claims 1 — 3.

7. Process for the preparation of granules of the polysaccharide forms defined in Claims 1 — 3, characterised in that the powdered polysaccharide forms are granulated with a solution, adjusted to about pH 2, of gelatin in aqueous ethanol, in a manner known per se.

### Claims for the contracting state: AT

1. Process for the preparation of dietetic foods, characterised in that polysaccharide forms, which are obtained by extraction from vegetable protopectin-containing raw materials, if necessary with the juice removed, with aqueous solutions of inert, neutrally-reacting organic solvents miscible with water, preferably lower alcohols with 1 to 4 carbon atoms, are incorporated into conventional foodstuffs in a quantity of 15 to 90 percent by weight.

2. Process for the preparation of dietetic foods according to Claim 1, characterised in that as protopectin-containing starting materials there are used stone fruit, drupes, citrus fruits or beets, beet waste, carrots, stoned corncobs or sunflower corollae or hemp stalk waste, from which the juice has been removed.

3. Process according to Claim 2, characterised in that as starting material apples are used preferably shortly before final ripeness and from which the juice has been removed.

4. Process for the preparation of dietetic foods according to Claims 1 to 3 in the form of baker goods, characterised in that during the preparation of the dough mixture 15 to 88% of the polysaccharide forms defined in Claims 1 to 3 are added and then the dough is processed further in conventional manner.

5. Process for the preparation of granules from the polysaccharide formed defined in Claims 1 to 3, characterised in that the powdered polysaccharide forms are granulated in per se known manner with a solution, adjusted to about pH 2, of gelatin in aqueous ethanol.

### Revendications pour la Etats contractants: BE, CH, LI, DE, FR, GB, IT, LU, NL, SE

1. Aliment diététique, caractérisé par une teneur en formes polysaccharides obtenues par l'extraction de matières premières végétales contenant de la protopectine et dont on a éventuellement extrait le jus, par des solutions aqueuses de solvants organiques indifférents réagissant de façon neutre et miscibles avec de l'eau de préférence des alcools inférieurs ayant de 1 à 4 atomes de carbone.

2. Aliment diététique selon la revendication 1, caractérisé en ce qu'on utilise comme matières de départ contenant de la protopectine des fruits à pépins, des fruits à noyaux dont on a extrait le jus, des agrumes ou des raves, des carottes, des épis de maïs ou des couronnes de tournesol égrénés ou des déchets de tiges de chanvre.

3. Aliment diététique selon la revendication 2, caractérisé en ce qu'on utilise comme matière de départ des pommes dont on a extrait le jus, de préférence des pommes se trouvant juste avant la maturité terminale.

4. Aliment diététique selon les revendications 1 à 3, caractérisé par une teneur de 10% en poids ou plus de formes polysaccharides définies aux revendications 1 à 3.

5. Aliment diététique selon les revendications 1 à 4, caractérisé par une teneur de 15 à 90% en poids des formes polysaccharides définies dans les revendications 1 à 3.

6. Biscuits diététiques en particulier pain diététique, caractérisés par une teneur de 15 à 88% en formes polysaccharides définies dans les revendications 1 à 3.

7. Procédé pour fabriquer des granulés de formes polysaccharides définies dans les revendications 1 à 3, caractérisé par la granulation effectuée de manière connue des formes polysaccharides pulvérulentes avec une solution réglée à environ pH 2 de gélatine dans de l'éthanol aqueux.

### Revendications pour Autriche l'Etat contractant: AT

1. Procédé pour fabriquer des aliments diététiques, caractérisé en ce qu'on incorpore en une quantité de 15 à 90% en poids dans des aliments usuels des formes polysaccharides obtenues par l'extraction de matières premières végétales contenant de la protopectine et dont on a éventuellement extrait le jus, avec des solutions aqueuses de solvants organiques indifférents, réagissant de façon neutre et miscibles à de l'eau, de préférence des alcools inférieurs ayant de 1 à 4 atomes de carbone.

2. Procédé pour préparer des aliments diététiques selon la revendication 1, caractérisé en ce qu'on emploie comme matières de départ contenant de la protopectine des fruits à pépins, des fruits à noyaux dont on a extrait le jus, des agrumes ou des raves, des déchets de rave, des carottes, des épis de maïs ou des coroles de tournesol égrénés ou des déchets de tiges de chanvre.

3. Procédé selon la revendication 2, caractérisé en ce qu'on utilise comme matière de départ des pommes dont on a extrait le jus, de préférence des pommes se trouvant juste avant la maturité terminale.

4. Procédé pour préparer des aliments diététiques selon les revendications 1 à 3, sous la forme de biscuits, caractérisé en ce que lors de la préparation du mélange de pâte, on ajoute de 15 à 88% des formes polysaccharides définies dans les revendications 1 à 3 et on traite alors la pâte de la manière habituelle.

5. Procédé pour préparer des granulés à partir des formes polysaccharides définies dans les revendications 1 à 3, caractérisé par la granulation effectuée de manière connue des formes polysaccharides pulvérulentes avec une solution réglée à environ pH 2 de gélatine dans de l'éthanol aqueux.